# FASCICULE DE BREVET EUROPEEN

(11) **EP 0 759 133 B1**
(45) Date de publication et mention de la délivrance du brevet: **25.11.1998**
(21) Numéro de dépôt: 95920937.0
(22) Date de dépôt: 11.05.1995
(51) Int. Cl.: F16K 43/00, F16K 31/08, E03B 7/07

(54) **ENSEMBLE VANNE-CLAPET D'ISOLEMENT ET APPLICATION NOTAMMENT A UN POSTE DE COMPTAGE D'EAU**
ABSPERRVENTILVORRICHTUNG FÜR EINE WASSERZÄHLERANLAGE
VALVE/SEAL ASSEMBLY AND USE THEREOF, IN PARTICULAR IN A WATER METERING UNIT

(30) Priorité: 11.05.1994 FR 9406023
(43) Date de publication de la demande: 26.02.1997
(73) Titulaire: Persohn, Philippe, F-33430 Bazas (FR); Persohn, Paul, F-33430 Bazas (FR)
(72) Inventeur: Persohn, Philippe, F-33430 Bazas (FR); Persohn, Paul, F-33430 Bazas (FR)
(74) Mandataire: Thébault, Jean-Louis
(86) Numéro de dépôt international: FR9500622
(87) Numéro de publication internationale: WO9531664

(56) Documents cités:
- EP-A- 0 446 507
- DE-A- 111 455
- FR-A- 2 206 726
- FR-A- 2 237 015
- US-A- 3 203 443
- US-A- 4 245 814

## Description

La présente invention se rapporte à un ensemble vanne-clapet d'isolement et à son application notamment à un poste de comptage d'eau.

Un ensemble vanne-clapet d'isolement conforme au préambule de la revendication 1 est décrit dans le document DE-C-111 455.

Dans la description qui va suivre, on emploiera le terme de vanne pour désigner indifféremment une vanne ou un robinet.

Lorsque l'on veut intervenir sur une vanne, pour l'entretenir, la réparer ou la changer par exemple, il faut d'abord l'isoler en intervenant en amont sur la canalisation d'alimentation. Cet isolement se fait par une vanne d'arrêt.

Il peut arriver que la fermeture de cette vanne d'arrêt coupe de façon indésirable l'alimentation d'autres conduites connectées en parallèle avec celle qui est munie de la vanne sur laquelle on désire intervenir.

De plus, la fermeture de cette vanne d'arrêt n'est pas toujours très aisée. En effet, il arrive que cette vanne d'arrêt soit difficile d'accès ou que son actionnement soit rendu difficile par de longues périodes d'inutilisation.

Par exemple, dans le cas où l'intervention est pratiquée sur la vanne amont d'un poste de comptage d'eau, on est amené à fermer une vanne d'arrêt située plus en amont, enterrée dans le sol au niveau de la canalisation publique, et accessible depuis la surface du trottoir ou de la chaussée à travers une pièce métallique affleurante nommée "tête de bouche à clé".

D'une part, cette vanne d'arrêt n'est pas toujours facile d'accès et, d'autre part, son actionnement est souvent malaisé en raison de la rareté de ses utilisations. De plus, la disposition affleurante sur la chaussée de la tête de bouche à clé pose des problèmes lors de la réfection de ladite chaussée.

Un des buts de l'invention est de proposer un ensemble qui permette d'isoler momentanément une vanne et qui soit situé immédiatement en amont de cette dernière, rendant ainsi plus pratique l'opération d'isolement et évitant l'installation en amont dans la canalisation d'alimentation d'un dispositif spécial d'isolement.

Un autre but de l'invention est d'appliquer ce dispositif à un poste de comptage d'eau par exemple, en lui faisant jouer le rôle de vanne amont du compteur. Dans ce cas, le dispositif de l'invention permet d'éviter l'installation d'une vanne enterrée à proximité de la canalisation publique (tête de bouche à clé).

L'invention vise encore à proposer, dans l'application à un poste de comptage d'eau, une structure, faisant office de bouche à clé, unité de comptage et interface de raccordement entre le réseau et un abonné, et logée dans une cuve ou coffret semi-enterré spécial.

A cet effet, l'invention a pour objet un ensemble vanne-clapet d'isolement comportant une vanne raccordée à une canalisation d'alimentation par l'intermédiaire d'un dispositif d'isolement formé d'un siège et d'un organe d'obturation mobile entre deux positions, caractérisé en ce que l'organe d'obturation est en matériau magnétique et en ce que la première position est une position de repos sous l'effet de la pesanteur, dans laquelle l'organe d'obturation ne peut pas être entraîné par le flux circulant dans la vanne et, la seconde position est une position dans laquelle il peut être entraîné par ledit flux suite à un soulèvement communiqué par l'application, au voisinage dudit organe d'obturation, d'un champ magnétique, un moyen étant prévu pour rétablir ultérieurement une équipression de part et d'autre de l'organe d'obturation sur son siège en vue de son retour dans ladite position de repos.

Suivant un mode de réalisation, ledit dispositif d'isolement est formé d'un organe d'obturation en matériau magnétique, mobile dans une cage disposée dans un conduit de passage sensiblement coaxialement et verticalement, à distance de la paroi du conduit, ladite cage étant fermée à son extrémité amont par un bouclier de forme et dimension correspondant à celles dudit organe d'obturation, chargé de préserver l'organe d'obturation de l'entraînement par le flux circulant dans la vanne, l'extrémité aval de la cage définissant un siège d'obturation de l'orifice aval dudit conduit, l'agencement dudit dispositif étant tel qu'en position d'ouverture de la vanne, l'organe d'obturation se trouve, dans ladite position de repos, dans le bouclier.

Suivant un mode de réalisation préféré, l'organe d'obturation est une bille et le bouclier protecteur est un casque hémisphérique.

Avantageusement, l'ensemble vanne-clapet d'isolement est appliqué à un poste de comptage d'eau, ledit ensemble constituant la partie amont d'un support de compteur raccordée à une colonne montante, cependant que la partie aval dudit support de compteur est raccordée à une colonne descendante, les orifices de raccordement amont et aval desdites colonnes montante et descendante présentant un entraxe réduit au minimum, et l'axe de l'organe de commande de la vanne étant disposé en oblique, latéralement au support de compteur.

De préférence, dans l'application au poste de comptage d'eau, la paroi externe dudit support de compteur comporte éventuellement une empreinte latérale d'axe parallèle aux axes desdits orifices de raccordement, disposée à très faible distance de ces derniers et destinée à recevoir latéralement au support de compteur l'extrémité supérieure d'un caloduc ou analogue, pressé contre ladite empreinte par des moyens de bridage appropriés.

Avantageusement, toujours dans l'application au poste de comptage d'eau, ledit support de compteur présente à sa partie inférieure des pattes de fixation en débordement susceptibles de recevoir, sur leur face supérieure, la face externe du fond d'une cuve de protection, ledit fond étant muni d'une ouverture configurée de façon à permettre d'enfiler ladite cuve sur ledit support de compteur raccordé auxdites colonnes montante et descendante.

D'autres caractéristiques et avantages ressortiront de la description qui va suivre d'un mode de réalisation de l'invention dans son application à un poste de comptage d'eau, description donnée à titre d'exemple uniquement, en regard des dessins annexés sur lesquels :
- Figure 1 représente une vue partiellement en coupe axiale d'un ensemble vanne-clapet d'isolement de l'invention dans son application à un poste de comptage d'eau ;
- Figure 2 représente une vue de dessous du support de compteur d'eau de la figure 1 ;
- Figure 3 est une vue en élévation latérale du support de compteur d'eau de la figure 2 ;
- Figure 4 est une vue de droite du support de compteur d'eau de la figure 3 ;
- Figure 5 est une vue en élévation en coupe d'un poste de comptage d'eau comprenant une cuve semi-enterrée et un compteur raccordé aux colonnes montante et descendante d'un réseau de distribution par l'intermédiaire du dispositif de la figure 1, et
- Figure 6 est une vue de dessous de la seule cuve de la figure 5.

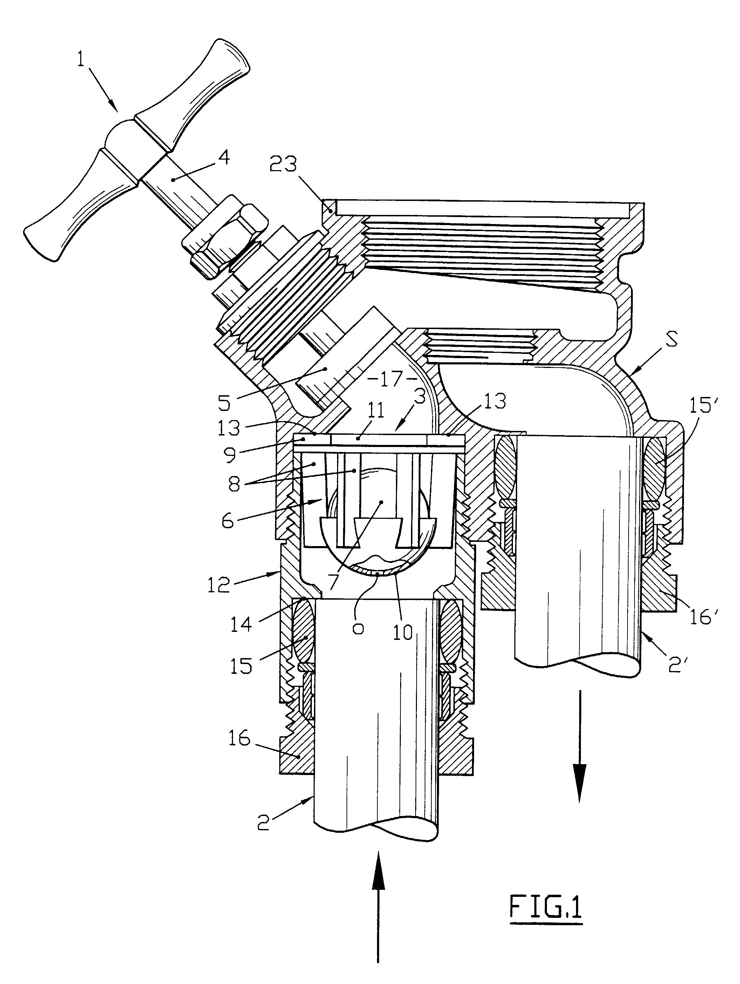

La figure 1 représente un ensemble vanne-clapet d'isolement de l'invention dans son application à un poste de comptage d'eau. Plus précisément, cette figure représente un support de compteur S dont la partie amont est formée par un ensemble vanne-clapet d'isolement selon l'invention. Il est clair qu'il ne s'agit que d'un exemple particulier de réalisation de l'ensemble vanne-clapet d'isolement de l'invention, lequel ensemble peut, bien entendu, être utilisé dans une application différente, ou seul pour constituer par exemple un robinet de puisage.

Le support de compteur S comprend, représenté du côté gauche de la figure 1, l'ensemble vanne-clapet d'isolement de l'invention qui en forme la partie amont et, représentée du côté droit, la partie aval du support de compteur.

L'ensemble vanne-clapet d'isolement comporte une vanne 1 raccordée à une colonne montante 2. Un dispositif 3 formant clapet d'isolement à bille est interposé entre la vanne 1 et la colonne montante 2. Sur la figure 1, la vanne 1 et le dispositif 3 ne sont pas représentés en coupe.

L'ensemble vanne-clapet d'isolement, raccordé à la colonne montante, forme la vanne amont du compteur (non représenté).

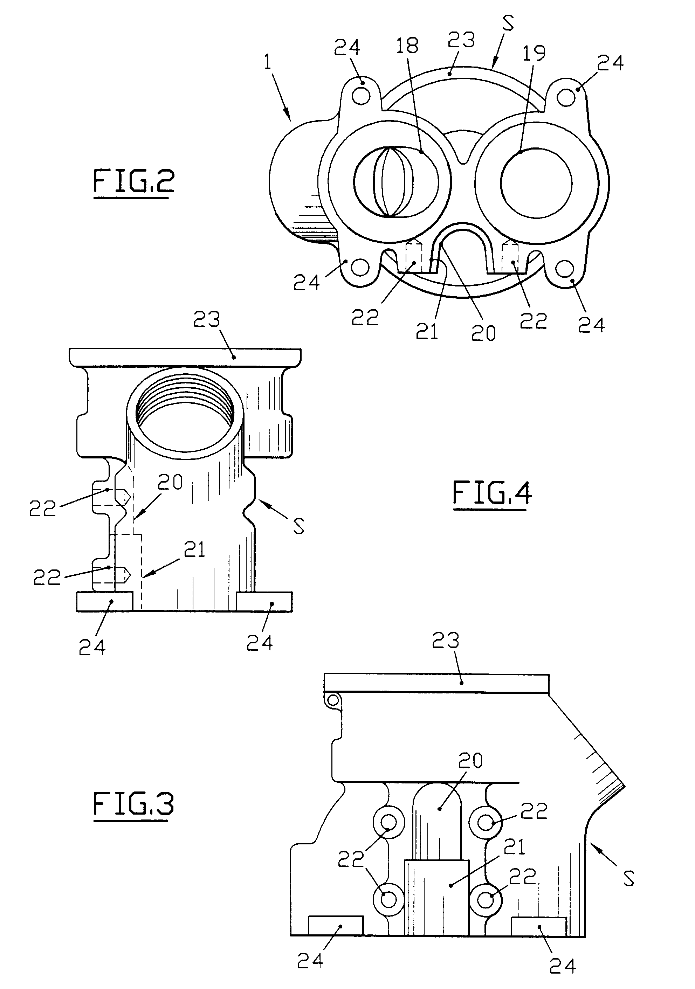

La vanne 1 est représentée inclinée. Elle peut, bien entendu, prendre une position quelconque entre la perpendiculaire à la colonne montante et une position parallèle à cette dernière, telle que représentée sur la figure 3.

La vanne 1 peut être une vanne de tout type connu. L'organe de commande de la vanne 1 est représenté en 4 et son organe d'obturation en 5.

Le dispositif 3 formant clapet d'isolement est constitué d'une cage 6 emprisonnant une bille 7 en matériau magnétique.

La cage 6, de forme sensiblement cylindrique, est constituée de barreaux 8 dont les extrémités sont fixées, d'un coté à un siège annulaire 9 et, de l'autre coté à un casque hémisphérique 10. Les barreaux 8 ménagent entre eux des intervalles permettant le passage du fluide.

Le siège annulaire 9 présente un orifice 11 de diamètre inférieur à celui de la bille 7.

La cage 6 est disposée coaxialement à la colonne montante 2, le casque hémisphérique 10 en amont, c'est à dire en bas, et le siège en aval, c'est à dite en haut.

En utilisation normale, la bille repose par gravité dans le casque hémisphérique qui l'abrite du flux ascendant.

Dans l'exemple représenté, le dispositif 3 formant clapet d'isolement est logé dans un raccord 12 interposé entre la colonne montante 2 et le support S, à une certaine distance de la paroi interne de ce raccord pour conserver une section de passage suffisante au liquide. Le siège 9 est pressé par l'extrémité du raccord 12 contre un épaulement 13 ménagé dans le support de compteur immédiatement en amont de la vanne 1.

Le raccord 12 est, côté colonne montante 2, intérieurement muni d'un épaulement 14 contre lequel peut venir s'appuyer la colonne montante 2 et un joint torique 15 pressé à la manière connue contre l'épaulement 14 par une virole 16 pour assurer l'étanchéité entre le raccord 12 et la colonne montante 2. La partie aval du support de compteur S est raccordée à une colonne descendante 2' par un montage similaire comprenant un joint torique 15' et une virole 16'.

Si la vanne 1 doit être enlevée pour une raison ou pour une autre, il faut l'isoler de la colonne montante 2. Pour ce faire, alors que la vanne 1 est ouverte, on approche de la bille 7 un aimant ou un électro-aimant suffisamment puissant, ce qui permet de décoller légèrement la bille 7 du casque 10. La bille, qui était auparavant protégée par le casque de l'entraînement du flux d'eau, est alors entraînée par le flux contre le siège 9 sur lequel elle bute, ce qui a pour effet d'isoler la vanne 1. On peut alors retirer la vanne 1.

Dès la remise en place de la vanne 1, ou mise en place d'une nouvelle vanne, il faut écarter la bille 7 du siège 9 et la ramener dans le casque 10.

Ceci peut s'opérer par exemple en ménageant une petite fuite entre la bille 7 et le siège 9 ou dans la paroi du siège 9, en sorte de remplir d'eau la chambre 17 définie entre ledit siège 9 et l'organe d'obturation 5 de la vanne 1, bien entendu en position d'obturation.

Dès que la chambre 17 est remplie d'eau, ce qui demande peu de temps vu sa taille, l'équilibrage des pressions sur la bille 7 entre la chambre 17 et la chambre du raccord 12 entraîne la descente par gravité de la bille 7 dans le casque 10 où elle demeurera jusqu'à la prochaine intervention magnétique. On peut alors à nouveau ré-ouvrir la vanne 1.

En vue de réduire l'effort de soulèvement de la bille 7 par rapport au casque 10, en particulier en cas de fort débit dans le conduit 12, on peut avantageusement munir le fond du casque d'un orifice calibré comme illustré en O sur la figure 1, ce qui diminue la différence de pression régnant sur les faces opposées de la bille.

Suivant une autre caractéristique de l'invention, illustrée sur les figures 2 à 4, le support de compteur S est configuré de manière remarquablement compacte, avec un rapprochement au maximum des orifices 18 et 19 de raccordement aux colonnes montante 2 et descendante 2', ces deux orifices étant dans un même plan.

Eventuellement, suivant encore une autre caractéristique de l'invention, le support de compteur S est muni sur sa paroi externe, latéralement, d'une empreinte à deux compartiments 20, 21 sensiblement semi-cylindriques et d'axes parallèles aux colonnes montante et descendante.

Cette empreinte double 20, 21 est destinée à recevoir latéralement au support S l'extrémité supérieure d'un caloduc ou analogue, qui y sera fermement retenu à l'aide de brides latérales appropriées fixées par boulonnage dans des trous borgnes taraudés 22 appropriés.

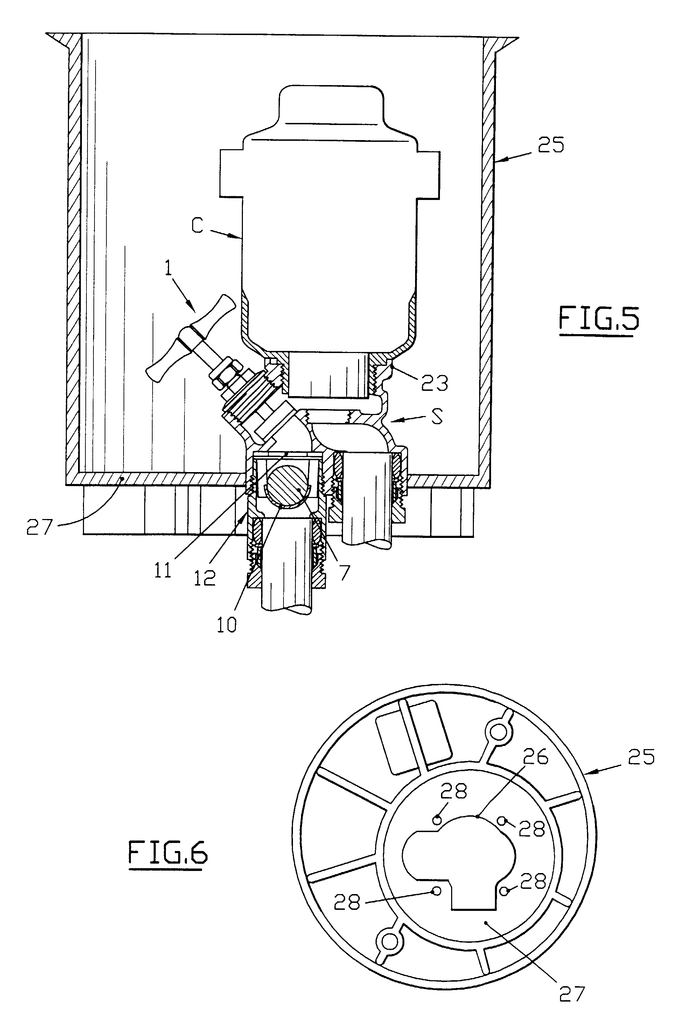

Le support S est, par ailleurs, muni en partie supérieure, d'une collerette 23 de réception d'un compteur C (figure 5) et, en partie inférieure, de pattes horizontales 24 de fixation, faisant saillie par rapport au corps central du support (figure 2).

Sur la figure 5, on a représenté le dispositif de la figure 1 avec le compteur C logé dans une cuve 25 semi-enterrée présentant, suivant encore une autre caractéristique de l'invention, une ouverture 26 ménagée dans son fond 27, configurée de façon à permettre à la cuve 25 d'être enfilée sur l'ensemble support S - compteur C, en sorte que la face externe du fond 27, au voisinage de l'ouverture 26, repose sur la face supérieure des pattes débordantes 24.

Des trous 28 ménagés dans ledit fond 27 en regard des trous des pattes 24 permettent la fixation de la cuve 25 sur le support S.

La structure représentée en figure 5 permet d'accéder directement dans la cuve 25 au voisinage du pied de la vanne 1 pour y engendrer, la vanne étant ouverte, et à l'aide d'un aimant approprié, le champ magnétique nécessaire au soulèvement de la bille 7, ou organe d'obturation équivalent techniquement, dans le fond du casque 10 ou analogue, en vue de l'obturation du siège (11).

Bien entendu, l'invention n'est pas limitée au mode de réalisation représenté et décrit ci-dessus mais en couvre au contraire toutes les variantes, notamment en ce qui concerne l'agencement de la cage à bille et de son logement de réception. La bille 7 peut être remplacée par tout organe d'obturation techniquement équivalent et le casque 10 par tout bouclier adapté aux formes et dimensions de l'organe d'obturation et chargé de préserver l'organe d'obturation de l'entraînement par le flux ascendant dans le conduit 12.

D'une manière générale, le dispositif d'isolement de l'invention est formé d'un siège et d'un organe d'obturation en matériau magnétique, mobile entre deux positions, l'une, de repos sous l'effet de la pesanteur, dans laquelle il ne peut pas être entraîné par le flux circulant dans la vanne et, l'autre, dans laquelle il peut être entraîné par ledit flux suite à un soulèvement communiqué par l'application, au voisinage dudit organe d'obturation, d'un champ magnétique, un moyen étant prévu pour rétablir ultérieurement une équipression de part et d'autre de l'organe d'obturation sur son siège en vue de son retour dans ladite position de repos.

## Revendications

1. Ensemble vanne-clapet d'isolement comportant une vanne (1) raccordée à une canalisation d'alimentation (2) par l'intermédiaire d'un dispositif d'isolement (3) formé d'un siège (9) et d'un organe d'obturation (7) mobile entre deux positions, caractérisé en ce que l'organe d'obturation est en matériau magnétique et en ce que la première position est une position de repos sous l'effet de la pesanteur, dans laquelle l'organe d'obturation ne peut pas être entraîné par le flux circulant dans la vanne et, la seconde position est une position dans laquelle il peut être entraîné par ledit flux suite à un soulèvement communiqué par l'application, au voisinage dudit organe d'obturation (7), d'un champ magnétique, un moyen étant prévu pour rétablir ultérieurement une équipression de part et d'autre de l'organe d'obturation sur son siège (9) en vue de son retour dans ladite position de repos.

2. Ensemble vanne-clapet d'isolement selon la revendication 1, caractérisé en ce que ledit dispositif d'isolement (3) est formé d'un organe d'obturation (7) en matériau magnétique, mobile dans une cage (6) disposée dans un conduit de passage (3) sensiblement coaxialement et verticalement, à distance de la paroi du conduit (3), ladite cage (6) étant fermée à son extrémité amont par un bouclier (10) de forme et dimension correspondant à celles dudit organe d'obturation (7), chargé de préserver l'organe d'obturation de l'entraînement par le flux circulant dans la vanne, l'extrémité aval de la cage définissant un siège (9) d'obturation de l'orifice aval dudit conduit (3), l'agencement dudit dispositif étant tel qu'en position d'ouverture de la vanne (1), l'organe d'obturation (7) se trouve, dans ladite position de repos, dans le bouclier (10).

3. Ensemble vanne-clapet d'isolement selon la revendication 2, caractérisé en ce que ledit organe d'obturation est une bille ou analogue (7) et ledit bouclier est un casque hémisphérique (10).

4. Ensemble vanne-clapet d'isolement suivant l'une des revendications 1 à 3, caractérisé en ce que ledit moyen de rétablissement d'une équipression est constitué par une fuite ménagée au droit ou à proximité du siège (9) et faisant communiquer les chambres de part et d'autre dudit siège.

5. Ensemble vanne-clapet selon la revendication 3 ou 4, caractérisé en ce que le fond du casque (10) est muni d'un orifice de passage calibré (O).

6. Application de l'ensemble vanne-clapet d'isolement selon l'une des revendications 1 à 5, à un poste de comptage d'eau, caractérisée en ce que ledit ensemble constitue la partie amont d'un support de compteur (S), raccordée à une colonne montante (2), cependant que la partie aval dudit support de compteur est raccordée à une colonne descendante (2'), les orifices de raccordement amont (18) et aval (19) desdites colonnes montante (2) et descendante (2') présentant un entraxe réduit au minimum, et l'axe de l'organe de commande de la vanne (1) étant disposé en oblique, latéralement au support de compteur (S).

7. Poste de comptage d'eau suivant la revendication 6, caractérisé en ce que la paroi externe dudit support de compteur (S) comporte une empreinte latérale (20, 21) d'axe parallèle aux axes desdits orifices de raccordement (18, 19), disposée à très faible distance de ces derniers et destinée à recevoir latéralement au support de compteur (S) l'extrémité supérieure d'un caloduc ou analogue, pressé contre ladite empreinte par des moyens de bridage latéral appropriés.

8. Poste de comptage d'eau suivant la revendication 6 ou 7, caractérisé en ce que ledit support de compteur (S) présente à sa partie inférieure des pattes de fixation (24) en débordement, susceptibles de recevoir, sur leur face supérieure, la face externe du fond d'une cuve de protection (25), ledit fond étant muni d'une ouverture (26) configurée de façon à permettre d'enfiler ladite cuve sur ledit support de compteur raccordé auxdites colonnes montante (2) et descendante (2').

## Patentansprüche

1. Absperrventilvorrichtung umfaßend ein Ventil (1), das mit einer Versorgungsleitung (2) über eine Trenneinrichtung (3) verbunden ist, die aus einem Sitz (9) und einem zwischen zwei Positionen beweglichen Verschlußorgan (7) gebildet wird, dadurch gekennzeichnet, daß das Verschlußorgan aus magnetischem Material ist und daß die erste Position eine Ruheposition unter Schwerkraftwirkung ist, in der das Absperrorgan nicht durch die in dem Ventil zirkulierende Strömung mitgeführt wird, während die zweite Position eine Position ist, in der es durch die Strömung nach einem Anheben, bewirkt durch Anlegen eines magnetischen Feldes benachbart zum Absperrorgan (7) mitgenommen werden kann, wobei ein Mittel vorgesehen ist, um später einen Gleichgewichtsdruck zwischen dem Absperrorgan und seinem Sitz (9) zur Rückkehr in seine Ruheposition wieder herzustellen.

2. Absperrventilvorrichtung nach Anspruch 1, dadurch gekennzeichnet, daß die Trenneinrichtung (3) durch ein Absperrorgan (7) aus magnetischem Material gebildet wird, das in einem Käfig (6) beweglich ist, der in einer Durchtrittsleitung (3) im wesentlichen koaxial und vertikal mit Abstand zur Wandung der Leitung (3) angeordnet ist, wobei der Käfig (6) an seinem stromaufwärtigen Ende durch einen Schild (10) mit einer Form und Abmessung entsprechend derjenigen des Absperrorgans (7) verschlossen ist, eine Mitnahme des Absperrorgans in der in dem Ventil zirkulierenden Strömung verhindert, wobei das stromabwärtige Ende des Käfigs einen Absperrsitz (9) für die stromabwärtige öffnung der Leitung (3) definiert, wobei die Anordnung der Einrichtung derart ist, daß in Öffnungsstellung des Ventils (1) sich das Absperrorgan (7) in seiner Ruheposition in dem Schild (10) befindet.

3. Absperrventilvorrichtung nach Anspruch 2, dadurch gekennzeichnet, daß das Absperrorgan eine Kugel oder dergleichen (7) und der Schild eine halbkugelige Schale (10) ist.

4. Absperrventilvorrichtung nach einem der Ansprüche 1 bis 3, dadurch gekennzeichnet, daß das Mittel zum Wiederherstellen eines Gleichgewichtsdrucks durch eine Leckage gebildet wird, die am oder in der Nähe des Sitzes (9) angebracht ist und die Kammern beiderseits des Sitzes miteinander verbindet.

5. Absperrventilvorrichtung nach Anspruch 3 oder 4, dadurch gekennzeichnet, daß der Boden der Schale (10) mit einer kalibrierten Durchtrittsöffnung (0) versehen ist.

6. Verwendung der Absperrventilvorrichtung nach einem der Ansprüche 1 bis 5 in einer Wassererzählanlage, dadurch gekennzeichnet, daß die Vorrichtung den stromaufwärtigen Teil eines Zählerträgers (S) bildet, der mit einem aufsteigenden Rohr (2) verbunden ist, wobei jedoch der stromabwärtige Teil des Zählerträgers mit einem abwärts führenden Rohr (2') verbunden ist, wobei die stromaufwärtigen und stromabwärtigen Anschlußöffnungen (18, 19) des aufwärts führenden Rohrs (2) und des abwärts führenden Rohrs (2') einen auf ein Minimum reduzierten Achsabstand aufweisen, wobei die Achse des Steuerorgans für das Ventil (1) schräg seitlich zum Zählerträger (S) angeordnet ist.

7. Wasserzähleranlage nach Anspruch 6, dadurch gekennzeichnet, daß die Außenwandung des Zählerträgers (S) eine seitliche Vertiefung (20, 21) mit einer Achse parallel zu den Achsen der Anschlußöffnungen (18, 19) umfaßt, die in sehr geringem Abstand zu diesen letzteren angeordnet und dazu bestimmt ist, seitlich zum Zählerträger (S) das obere Ende eines Wärmerohrs oder dergleichen aufzunehmen, das durch geeignete Seitenflanschmittel gegen die Vertiefung gedrückt wird.

8. Wasserzähleranlage nach Anspruch 6 oder 7, dadurch gekennzeichnet, daß der Zählerträger (S) in seinem unteren Bereich vorstehende Befestigungsstücke (24) aufweist, die geeignet sind, auf ihrer Oberseite die Außenseite des Bodens einer Schutzwanne (25) aufzunehmen, wobei der Boden mit einer Öffnung (26) versehen ist, die derart gestaltet ist, daß sie das Aufschieben der Wanne auf den Trägerzähler, der mit dem aufwärts führenden und dem abwärts führenden Rohr (2, 2') verbunden ist, zu ermöglichen.

## Claims

1. Valve / isolating shutter assembly including a valve (1) connected to a supply pipe (2) by means of an isolating device (3) formed by a seat (9) and an obturation member (7) movable between two positions, characterised in that the obturation member is made from magnetic material and in that the first position is a rest postion under the effect of gravity, in which the obturation member cannot be driven by the flow circulating in the valve, and the second position is a position in which it can be driven by said flow following a lifting communicated by the application, in the vicinity of said obturation member (7), of a magnetic field, a means being provided for subsequently reestablishing equal pressure on each side of the obturation member on its seat (9) with a view to its return into said rest postion.

2. Valve / isolating shutter assembly according to Claim 1, characterised in that said isolating device (3) is formed by an obturation member (7) made of magnetic material, movable in a cage (6) disposed in a passage duct (3) substantially coaxially and vertically, at a distance from the wall of the duct (3), said cage (6) being closed at its upstream end by a shield (10) with a shape and size corresponding to those of said obturation member (7), responsible for preserving the obturation member from the driving by the flow circulating in the valve, the downstream end of the cage defining a seat (9) for closing off the downstream orifice of said duct (3), the arrangement of said device being such that, in the position of opening of the valve (1), the obturation member (7) is situated, in said rest postion, in the shield (10).

3. Valve / isolating shutter assembly according to Claim 2, characterised in that said obturation member is a ball or similar (7) and said shield is a hemispherical cap (10).

4. Valve / isolating shutter assembly according to one of Claims 1 to 3, characterised in that said means of reestablishing an equipressure consists of a leakage formed in line with or in the vicinity of the seat (9) and causing the chambers on each side of said seat to communicate with each other.

5. Valve / shutter assembly according to Claim 3 or 4, characterised in that the base of the cap (10) is provided with a calibrated passage orifice (O).

6. Application of the valve / isolating shutter assembly according to one of Claims 1 to 5 to a water metering unit, characterised in that said assembly constitutes the upstream part of a meter support (S), connected to a rising pipe (2), whereas the downstream part of said meter support is connected to a descending pipe (2'), the upstream (18) and downstream (19) connecting orifices of said rising (2) and descending (2') pipes having a distance between centres which is reduced to a minimum, and the axis of the member controlling the valve (1) being disposed aslant, latterly to the meter support (S).

7. Water metering unit according to Claim 6, characterised in that the external wall of said meter support (S) has a lateral indentation (20, 21) with an axis parallel to the axes of said connecting orifices (18, 19), disposed at a very small distance from the latter and intended to receive, laterally to the meter support (S), the upper end of a heat transfer pipe or the like, pressed against said indentation by suitable lateral clamping means.

8. Water metering unit according to Claim 6 or 7, characterised in that said meter support (S) has, at its lower part, projecting fixing lugs (24) able to receive, on their top face, the external face of the base of a protective vessel (25), said base being provided with an opening (26) configured so as to enable said vessel to be slipped onto said meter support connected to said rising (2) and descending (2') pipes.
